# EUROPÄISCHE PATENTSCHRIFT

(11) **EP 2 954 127 B1**
(45) Veröffentlichungstag und Bekanntmachung des Hinweises auf die Patenterteilung: **31.07.2019**
(21) Anmeldenummer: 14717981.6
(22) Anmeldetag: 03.02.2014
(51) Int. Cl.: E04D 13/08

(54) **SYSTEM VON BAUTEILEN, DIE ZUSAMMENGESETZT EINEN REGENWASSERABSCHEIDER FÜR EIN FALLROHR BILDEN**
KIT OF PARTS FOR FORMING A DOWNPIPE FILTER
KIT DE COMPOSANTS POUR FORMER UN FILTER DANS TUYAU DE DESCENTE

(30) Priorität: 06.02.2013 DE 102013002013
(43) Veröffentlichungstag der Anmeldung: 16.12.2015
(73) Patentinhaber: WISY AG Haustechniksysteme, Filtertechnik, 63699 Kefenrod (DE)
(72) Erfinder: DENK, Arnold, 63688 Gedern (DE); MAURER, Jan, 63699 Kefenrod (DE)
(74) Vertreter: Hebing, Norbert
(86) Internationale Anmeldenummer: PCT/DE2014/000037
(87) Internationale Veröffentlichungsnummer: WO 2014/121779

(56) Entgegenhaltungen:
- DE-A1- 3 812 136
- GB-A- 2 391 182

## Beschreibung

Die Erfindung bezieht sich auf ein System von Bauteilen, die zusammengesetzt einen Regenwasserabscheider für ein Fallrohr bilden, wobei das System aus folgenden Bauteilen besteht:
einem zylindrischen Sieb,
einem zylindrischen Gehäuserohr,
einem Ringdeckel mit einem Einlaufstutzen für das Regenwasser, einem ringförmigen Grobsieb,
einer ringförmigen, eine Innenwand und eine Außenwand aufweisenden Auffangwanne, die einen zentralen Wasserablauf bildet.

Die Abmessungen des Siebs, des Gehäuserohres des Ringdeckels und der Auffangwanne sind so gewählt, dass diese in einer ersten Zusammenstellung so angeordnet werden können, dass
das Sieb im Gehäuserohr konzentrisch zur Längsachse des Gehäuserohres angeordnet ist, so dass ein Ringraum zwischen dem Sieb und dem Gehäuserohr ausgebildet ist,
der Ringraum an seiner Unterseite von der ringförmigen Auffangwanne verschlossen ist, wobei das Sieb auf dem Rand der Innenwand aufsitzt,
der zylindrische Einlaufstutzen für das Regenwasser zur Längsachse des Siebes angeordnet ist und sein unterer Rand in die obere Stirnseite des Siebes eintaucht,
wobei die Außenwand (15) der Auffangwanne (12) und der obere Rand des Gehäuserohres (3) die gleiche Kontur besitzen, so dass der Ringdeckel (5) sowohl dicht schließend auf das Gehäuserohr (3) als auch auf die Auffangwanne (12) aufsetzbar ist.

Ein derartiger Regenwasserabscheider ist in der DE 38 12 136 A1 beschrieben. Das Regenwasser läuft im Fallrohr an dessen Innenwand herab und gelangt über den Einlaufstutzen in das zylindrische Sieb. Ein ähnliches Regenwasser abscheider gemäß dem Stand der Technik wird auch in GB 239 182 A offenbart.

Im Sieb, wobei es sich vorzugsweise um ein Feinsieb handelt, wird aufgrund von Adhäsionskräften ein Teil des Wassers nach außen gesogen und gelangt somit feingefiltert in den Ringraum. Von dort läuft es in die Auffangwanne, die über einen seitlichen Ausgang verfügt- Das nicht gefilterte Wasser gelangt in den zentralen Wasserablauf und von dort in den unteren Teil des Fallrohrs.

Das Gehäuse des Regenwasserabscheiders besteht aus einem Deckel, einem Boden und einem dazwischen angeordneten Außenrohr, in dem sich ein Feinfilter befindet. Deckel und Boden lassen sich vom Außenrohr trennen, so dass es zum Austausch des Feinfilters entnommen werden kann.

Das derart gefilterte Wasser kann als Brauchwasser im Haushalt, z. B. für die Toilettenspülung oder für eine Waschmaschine, genutzt werden. Nicht immer ist aber eine solche Feinfilterung durch ein Feinsieb notwendig. Wenn das Wasser z. B. nur für die Gartenbewässerung benötigt wird, reicht eine Grobfilterung aus. Derartige Regenwasserabscheider sind bekannt.

Die Erfindung beruht auf der Aufgabe, ein System zu schaffen, dessen Bauteile genutzt werden können, um sowohl Brauchwasser als auch Gartenbewässerungswasser aus einem Fallrohr für Regenwasser abzuscheiden.

Zur Lösung der Aufgabe sieht die Erfindung vor, dass die Abmessungen des Ringdeckels und der Auffangwanne außerdem so gewählt sind, dass diese in einer zweiten Zusammenstellung so angeordnet werden können, dass der Ringdeckel unter Weglassung des Siebes und des Gehäuserohres unmittelbar auf der Außenwand der Auffangwanne aufgesetzt ist, wobei der untere Rand des zylindrischen Einlaufstutzens radial außerhalb der Innenwand der Auffangwanne liegt, so dass das Regenwasser unmittelbar in die Auffangwanne einlaufen kann, und dass zu dem System ein ringförmiges Grobsieb gehört, dessen Abmessungen so gewählt sind, dass es in der zweiten Zusammensetzung zwischen dem unteren Rand des zylindrischen Einlaufstutzens und der Innenwand der Auffangwanne angeordnet ist.

In der ersten Zusammensetzung erfolgt somit eine Feinfilterung, wodurch das gefilterte Regenwasser als Brauchwasser nutzbar ist. In der zweiten Zusammensetzung wird auf das Sieb und das Gehäuserohr verzichtet. Vielmehr wird der Ringdeckel unmittelbar auf die Auffangwanne aufgesetzt, so dass das Regenwasser unmittelbar - und zumindest nicht fein gefiltert - in die Auffangwanne einlaufen kann.

Da der Ringdeckel erfindungsgemäß sowohl zu dem Gehäuserohr als auch zu der Auffangwanne passt, können die gleichen Teile genutzt werden, um entweder die eine Zusammenstellung oder die andere Zusammenstellung zu realisieren. Die Bevorratung der Teile wird dadurch wesentlich vereinfacht.

Damit in der zweiten Zusammensetzung zumindest eine Grobfilterung erreicht wird, damit grobe Teile, wie Blätter und kleine Äste, nicht die Auffangwanne zusetzen, ist das ringförmiges Grobsieb vorgesehen. Dieses Grobfilter kann optional verwendet werden, wenn eine starke Belastung des Regenwassers mit groben Teilen zu erwarten ist.

Die Ausbeute an Wasser ist besonders dann groß, wenn in der zweiten Zusammensetzung der untere Rand des zylindrischen Einlaufstutzens in die Auffangwanne eintaucht.

Damit das aus dem Fallrohr in den Regenwasserabscheider gelangende Wasser auf die Siebfläche trifft, sieht die Erfindung vor, dass das Sieb nach unten hin konisch verengend verläuft, wobei der Durchmesser des unteren Randes des Einlaufstutzens kleiner ist als der größte Durchmesser des Siebes, so dass in der ersten Zusammensetzung der untere Rand des Einlaufstutzens in einer vertikalen Projektion über der konusförmigen Innenwand des Siebes verläuft.

In beiden Zusammensetzungen kann die Ausbeute erhöht werden, wenn das Regenwasser möglichst auf den Umfang des Einlaufstutzens gleichmäßig verteilt in das Sieb bzw. auf das Grobsieb läuft. Die Erfindung sieht daher vor, dass die Innenwand des Einlaufstutzens mit schraubenförmig verlaufenden Rillen oder Stegen versehen ist, die eine gleichmäßige Verteilung des in den Einlaufstutzen einströmenden Wassers über dessen Umfangfläche erreichen.

Um einerseits ein großes Volumen der Auffangwanne zu erreichen und andererseits einen kleinen Abstand des Fallrohres und des Regenwasserabscheiders zur Hauswand zu ermöglichen, sieht die Erfindung vor, dass die Außenkontur des Ringdeckels des Gehäuserohres und der Auffangwanne jeweils einen übereinstimmenden rechteckigen oder elliptischen Querschnitt aufweisen. Grundsätzlich kann aber auch weiterhin ein üblicher runder Querschnitt gewählt werden.

Das Rechteck kann sowohl jeweils gerade Kanten aufweisen, aber auch aus zwei parallel verlaufenden Strecken und zwei die Strecken miteinander verbindenden konvexen Krümmungen gebildet sein.

Im Folgenden soll anhand eines Ausführungsbeispieles die Erfindung im Einzelnen erläutert werden. Dazu zeigen:
- Fig. 1: eine Explosionsdarstellung eines erfindungsgemäßen Systems in einer ersten Zusammenstellung, wodurch ein Regenwasserabscheider für fein gefiltertes Betriebswasser gebildet wird,
- Fig. 2a, b: eine geschlossene Darstellung und eine Explosionsdarstellung eines erfindungsgemäßen Systems in einer zweiten Zusammenstellung, wodurch ein Regenwasserabscheider für grob gefiltertes Gartenwasser gebildet wird, und
- Fig. 3: eine schematische Darstellung der Nutzungsmöglichkeiten des Systems.

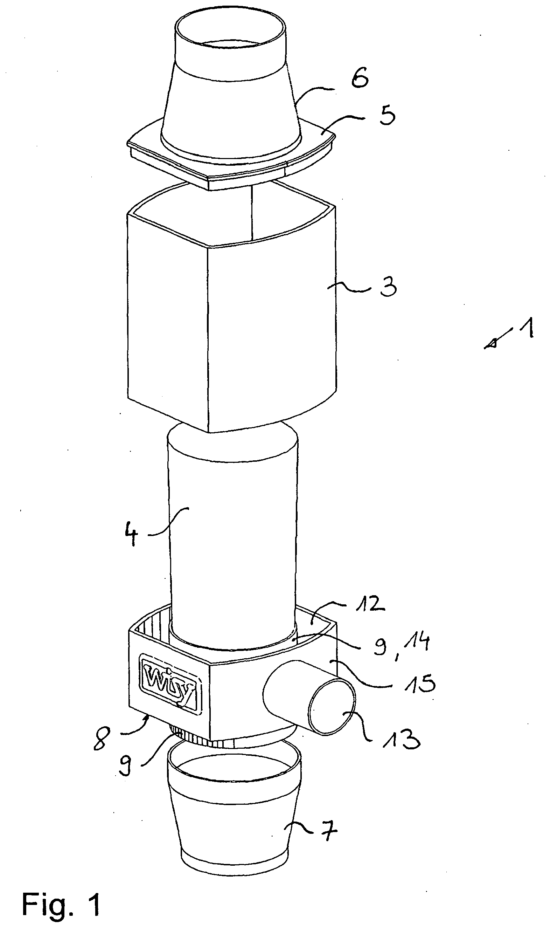

Die Fig. 1 zeigt ein Gehäuse eines Regenwasserabscheiders 1. Das Gehäuse besteht aus einem Gehäuserohr 3, in dem konzentrisch ein zylindrisches Sieb 4 angeordnet ist.

Das Gehäuserohr 3 wird an seinem oberen Ende von einem Ringdeckel 5, der die Form eines Ringes mit einem zentralen Einlaufstutzen 6 hat, abgedeckt. Der Einlaufstutzen 6 ist an dem oberen Teil eines hier nicht dargestellten Fallrohres, das zu einer Regenrinne führt, eingesteckt. Regenrinne führt, eingesteckt ist. Der untere Teil des Gehäuserohres 3 ist von einem Boden 8, der einen zentralen Ablaufstutzen 9 aufweist, verschlossen. Der Ablaufstutzen 9 ist mit dem unteren Teil des Fallrohres 7 verbunden, der zu einem Abwasserkanal führt.

Das obere Ende des zylindrischen Siebes 4 ist trichterförmig erweitert, wobei das untere Ende des Einlaufstutzens 6 in die trichterförmige Erweiterung eintaucht, die sich unterhalb des Ringdeckels 5 befindet, so dass das durch den Einlaufstutzen 6 einströmende Wasser in das Innere des Siebes 4 gelangt. Das untere Ende des Siebes 4 ist auf den Ablaufstutzen 9 aufgesteckt.

Das Regenwasser fällt nicht mittig durch das Fallrohr 7, sondern läuft an dessen Innenwänden herunter, so dass das über den Einlaufstutzen 6 in das Sieb 4 einströmende Wasser an der Innenwand des Siebes 4 entlangläuft. Das Sieb 4 ist aus zwei Lagen gebildet, die hier nicht näher dargestellt sind. Die innere Lage ist ein metallisches Gewebe, das das vorbeiströmende Wasser normalerweise nicht durchlässt. Die Poren des Gewebes sind nämlich kleiner als Wassertropfen, die wegen der Oberflächenspannung von Wasser nicht so klein werden, als dass sie durch die Poren hindurch treten könnten.

An der inneren Lage schließt sich daher nach außen die äußere Lage aus einem perforierten Blech an, das lediglich im oberen Bereich in Kontakt mit der inneren Lage steht.

Das Regenwasser, das nach außen durch die innere Lage hindurch gedrungen ist, gelangt in eine ringförmige Auffangwanne 12, die im Boden 8 des Gehäuses ausgebildet ist, und wird von dort über einen seitlichen Wasserablauf 13 einer hier nicht dargestellten Zisterne zugeführt.

Die Auffangwanne 12 besteht aus einer zylindrischen Innenwand 14 und einer dazu konzentrischen Außenwand 15. Die Innenwand 14 bildet den Ablaufstutzen 9 und die Außenwand 15 wird vom hochgezogenen Rand des Bodens 8 gebildet.

Um eine gleichmäßige Verteilung des Wassers auf die Siebfläche zu erhalten, ist die Innenwand des Einlaufstutzens 6 - was hier nicht dargestellt ist - mit mehreren Rillen oder Stegen versehen, die auf den Umfang verteilt sind und gegenüber der Vertikalen einen Winkel, von 15° - 30° einschließen, so dass sich eine Steigung von 60° - 85° ergibt.

Entscheidend ist weiterhin, dass der untere Rand des Einlaufstutzens 6 nach außen gerichtet ist, so dass das von der Kante ablaufende Wasser möglichst zur Siebfläche gerichtet ist.

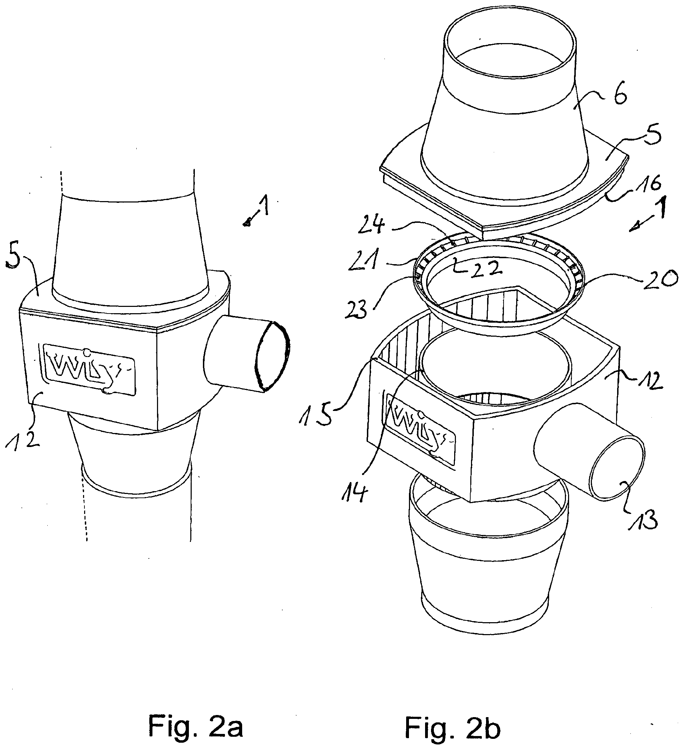

In der Fig. 2 ist eine andere Zusammenstellung gezeigt. Bei dieser Zusammenstellung wird auf das Gehäuserohr 3 und das Sieb 4 verzichtet. Der Ringdeckel 5 wird unmittelbar auf die Auffangwanne 12 aufgesetzt, wobei ein umlaufender Steg 16 am Ringdeckel 5 in die Auffangwanne 12 eingreift und dabei an der Innenseite der Außenwand 15 der Auffangwanne 12 anliegt. Der untere Rand des Einlaufstutzens 6 liegt außerhalb der Innenwand der Auffangwanne 12, so dass vom Rand des Einlaufstutzens 6 ablaufendes Wasser unmittelbar in die Auffangwanne 12 gelangt.

In der gezeigten Ausführung ist weiterhin optional ein ringförmiges Grobsieb 20 vorgesehen, das leicht konisch geformt ist, so dass sein weiter oben liegender Außenrand 21 mit dem unteren Rand des Einlaufstutzens 6 aufsteckbar ist, während der untenliegende Innenrand 22 auf die Innenwand 14 der Auffangwanne 12 gesteckt ist. Der Bereich zwischen dem Außen- und dem Innenrand 21, 22 ist mit einer Vielzahl von Öffnungen 23 versehen, die jeweils über einen den Innen- und Außenrand verbindenden Steg 24 voneinander getrennt sind. Diese Stege 24 bilden ein grobes Gitter, das grobe Feststoffe, wie Blätter, kleine Zweige usw. zurückhält und in den zentralen Ablaufstutzen 9 weiterleitet, der zum unteren Teil des Fallrohres führt. Der größte Teil des Regenwassers wird allerdings durch die Öffnungen 23 in die Auffangwanne gelangen und dort über den seitlichen Wasserablauf 13, z. B. in eine Regenwassertonne, abgeleitet werden.

Wie man den Fig. 1 und 2 entnehmen kann, haben das Gehäuserohr 3, der Ringdeckel 5 und die Auffangwanne 12 eine rechteckige Außenkontur, die von zwei geraden Strecken und zwei konvexen Strecken gebildet wird. Grundsätzlich kann aber auch wie üblich jeweils ein runder Querschnitt für das Gehäuserohr 3, den Ringdeckel 5 und die Auffangwanne 12 gewählt werden.

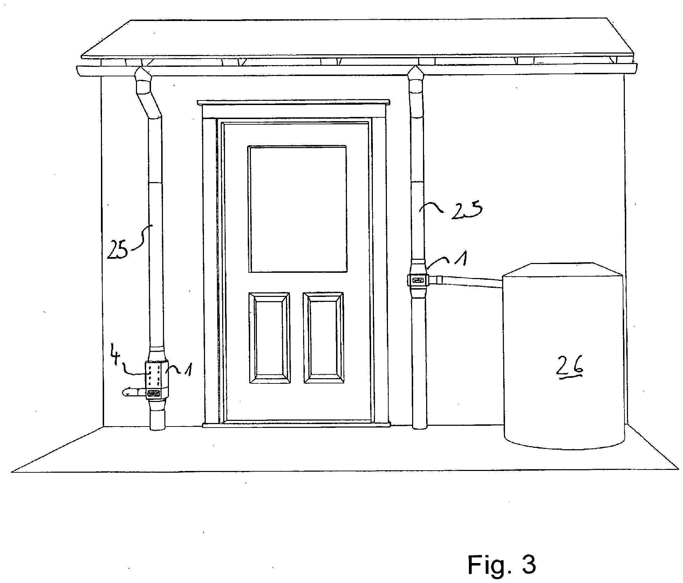

In der Fig. 3 sind noch mal die beiden Einsatzmöglichkeiten prinzipiell dargestellt. Am linken Fallrohr 25 besitzt der Regenwasserabscheider 1 ein Sieb 4 gemäß einer Zusammensetzung der Teile, wie sie mit der Fig.1 beschrieben ist, so dass das aus der Auffangwanne abgeleitete Wasser in das Haus geleitet wird, um dort als Brauchwasser, z. B. für die Toilettenspülung, genutzt werden zu können. Rechts der Tür besitzt der Wasserabscheider kein Sieb und entspricht somit einer Zusammensetzung von Teilen, wie sie mit der Fig. 2 beschrieben ist. Das aus dem Regenwasserabscheider abgeleitete Wasser wird einer Regenwassertonne 26 zugeführt, aus der Wasser zur Gartenbewässerung entnommen wird.

### Bezugszeichenliste

- 1: Regenwasserabscheider

- 3: Gehäuserohr
- 4: Sieb
- 5: Ringdeckel

- 6: Einlaufstutzen
- 7: Fallrohr

- 8: Boden
- 9: Ablaufstutzen

- 12: Auffangwanne
- 13: Wasserablauf

- 14: Innenwand
- 15: Außenwand
- 16: Steg

- 20: Grobsieb
- 21: Außenrand
- 22: Innenrand
- 23: Öffnungen
- 24: Stege
- 25: Fallrohr
- 26: Regenwassertonne

## Patentansprüche

1. System von Bauteilen, die zusammengesetzt einen Regenwasserabscheider für ein Fallrohr bilden, wobei das System aus folgenden Bauteilen besteht:
einem zylindrischen Sieb (4),
einem zylindrischen Gehäuserohr (3),
einem Ringdeckel (5) mit einem Einlaufstutzen (6) für das Regenwasser,
einer ringförmigen, eine Innenwand (14) und eine Außenwand (15) aufweisenden Auffangwanne (12), die einen zentralen Wasserablauf bildet,
wobei die Abmessungen des Siebes (4), des Gehäuserohres (3), des Ringdeckels (5) und der Auffangwanne (12) so gewählt sind, dass diese in einer ersten Zusammenstellung so angeordnet werden können, dass
das Sieb (4) im Gehäuserohr (3) konzentrisch zur Längsachse des Gehäuserohres angeordnet ist, so dass ein Ringraum zwischen dem Sieb und dem Gehäuserohr (3) ausgebildet ist,
der Ringraum an seiner Unterseite von der ringförmigen Auffangwanne (12) verschlossen ist, wobei das Sieb (4) auf dem Rand der Innenwand (14) aufsitzt,
der zylindrische Einlaufstutzen (6) für das Regenwasser zur Längsachse des Siebes (4) angeordnet ist und sein unterer Rand in die obere Stirnseite des Siebes (4) eintaucht,
und wobei die Außenwand (15) der Auffangwanne (12) und der obere Rand des Gehäuserohres (3) die gleiche Kontur besitzen, so dass der Ringdeckel (5) sowohl dicht schließend auf das Gehäuserohr (3) als auch auf die Auffangwanne (12) aufsetzbar ist, wobei
die Abmessungen des Ringdeckels (5) und der Auffangwanne (12) außerdem so gewählt sind, dass diese in einer zweiten Zusammenstellung so angeordnet werden können, dass
der Ringdeckel (5) unter Weglassung des Siebes (4) und des Gehäuserohres (3) unmittelbar auf der Außenwand (15) der Auffangwanne (12) aufgesetzt ist, wobei der untere Rand des zylindrischen Einlaufstutzens (6) radial außerhalb der Innenwand (14) der Auffangwanne liegt, so dass das Regenwasser unmittelbar in die Auffangwanne einlaufen kann,
**dadurch gekennzeichnet, dass** zu dem System ein ringförmiges Grobsieb (20) gehört, dessen Abmessungen so gewählt sind, dass es in der zweiten Zusammensetzung zwischen dem unteren Rand des zylindrischen Einlaufstutzens (6) und der Innenwand (14) der Auffangwanne (12) angeordnet ist.

2. System nach Anspruch 1, **dadurch gekennzeichnet, dass** in der zweiten Zusammensetzung der untere Rand des zylindrischen Einlaufstutzens (6) in die Auffangwanne (12) eintaucht.

3. System nach einem der vorhergehenden Ansprüche, **dadurch gekennzeichnet, dass** das Sieb (4) nach unten hin konisch verengend verläuft und dass der Durchmesser des unteren Randes des Einlaufstutzens (6) kleiner ist als der größte Durchmesser des Siebes (4), so dass in der ersten Zusammensetzung der untere Rand des Einlaufstutzens (6) in einer vertikalen Projektion über der konusförmigen Innenwand des Siebes (4) verläuft.

4. System nach einem der vorhergehenden Ansprüche, **dadurch gekennzeichnet, dass** die Innenwand des Einlaufstutzens (6) mit schraubenförmig verlaufenden Rillen oder Stegen versehen ist.

5. System nach einem der vorhergehenden Ansprüche, **dadurch gekennzeichnet, dass** die Außenkontur des Ringdeckels (5), des Gehäuserohres (3) und der Auffangwanne 12 jeweils einen übereinstimmenden rechteckigen oder elliptischen Querschnitt aufweisen.

6. System nach Anspruch 5, **dadurch gekennzeichnet, dass** die Konturen jeweils von zwei parallel verlaufenden Strecken und zwei die Strecken miteinander verbindenden konvexen Krümmungen gebildet sind.

## Claims

1. A system of components which, when assembled, form a rainwater separator for a downpipe, the system consisting of following components:
a cylindrical screen (4),
a cylindrical housing tube (3),
a ring-shaped lid (5) having a drain insert (6) for the rainwater,
a ring-shaped collecting basin (12), which has an inside wall (14) and an outside wall (15) and forms a central water outlet,
wherein the dimensions of the screen (4), of the housing tube (3), of the ring-shaped lid (5) and of the collecting basin (12) are selected such that, in a first assembly arrangement, they can be arranged so that
the screen (4) is arranged in the housing tube (3) concentrically with the longitudinal axis of the housing tube, so that an annular space is formed between the screen and the housing tube (3),
the annular space is sealed by the ring-shaped collecting basin (12) on its bottom side, wherein the screen (4) sits on the edge of the inside wall (14),
the cylindrical drain insert (6) for the rainwater is arranged relative to the longitudinal axis of the screen (4) and its lower edge is inserted into the upper end face of the screen (4), and wherein the outside wall (15) of the collecting basin (12) and the upper edge of the housing tube (3) have the same contour, so that the ring-shaped lid (5) can be placed on the housing tube (3) as well as on the collecting basin (12) to form a tight seal, wherein the dimensions of the ring-shaped lid (5) and of the collecting basin (12) are also selected such that they can be arranged in a second assembly arrangement, such that the ring-shaped lid (5) is placed directly on the outside wall (15) of the collecting basin (12), omitting the screen (4) and omitting the housing tube (3), wherein the lower edge of the cylindrical drain insert (6) is situated on the outside radially of the inside wall (14) of the collecting basin, so that rainwater can enter the collecting basin directly,
**characterized in that**
a ring-shaped coarse screen (20) is part of the system, its dimensions being selected such that, in the second assembly arrangement, it is arranged between the lower edge of the cylindrical drain insert (6) and the inside wall (14) of the collecting basin (12).

2. The system according to Claim 1, **characterized in that**, in the second assembly arrangement, the lower edge of the cylindrical drain insert (6) is inserted into the collecting basin (12).

3. The system according to any one of the preceding claims, **characterized in that** the screen (4) runs with a downward conical taper, and the diameter of the lower edge of the drain insert (6) is smaller than the largest diameter of the screen (4), so that, in the first assembly arrangement, the lower edge of the drain insert (6) runs over the conical inside wall of the screen (4) in a vertical projection.

4. The system according to any one of the preceding claims, **characterized in that** the inside wall of the drain insert (6) is provided with grooves or webs which run helically.

5. The system according to any one of the preceding claims, **characterized in that** the outside contour of the ring-shaped lid (5), of the housing tube (3) and of the collecting basin (12) each have a corresponding rectangular or elliptical cross section.

6. The system according to Claim 6, **characterized in that** the contours are each formed by two line segments running parallel and two convex curvatures connecting the line segments to one another.

## Revendications

1. Système de composants pour former un filtre d'eau pluviale dans un tuyau de descente, le système étant composé des composants suivants:
un tamis cylindrique (4),
un conduit d'enveloppe cylindrique (3),
un couvercle annulaire (5) avec une tubulure d'entrée (6) pour l'eau pluviale,
un bac de réception (12) de forme annulaire comportant une paroi intérieure (14) et une paroi extérieure (15), qui forme un écoulement d'eau central,
les dimensions du tamis (4), du conduit d'enveloppe (3), du couvercle annulaire (5) et du bac de réception (12) étant choisies de telle sorte que ceux-ci peuvent être disposés dans une première combinaison de telle façon que
le tamis (4) est disposé dans le conduit d'enveloppe (3) de façon concentrique à l'axe longitudinal du conduit d'enveloppe de sorte qu'un espace annulaire est constitué entre le tamis et le conduit d'enveloppe (3),
l'espace annulaire est fermé par le bac de réception (12) sur son côté inférieur, le tamis (4) reposant sur le bord de la paroi intérieure (14),
la tubulure d'entrée cylindrique (6) pour l'eau pluviale est disposée par rapport à l'axe longitudinal du tamis (4) et son bord inférieur plonge dans la face avant supérieure du tamis (4),
et la paroi extérieure (15) du bac de réception (12) et le bord supérieur du conduit d'enveloppe (3) possédant le même profil de telle sorte que le couvercle annulaire (5) peut être posé fermant de façon étanche aussi bien sur le conduit d'enveloppe (3) que sur le bac de réception (12),
les dimensions du couvercle annulaire (5) et du bac de réception (12) étant en outre choisies de telle sorte que ceux-ci peuvent être disposés dans une deuxième combinaison de telle sorte que
le couvercle annulaire (5) est posé directement sur la paroi extérieure (15) du bac de réception (12) en ne tenant pas compte du tamis (4) et du conduit d'enveloppe (3),
le bord inférieur de la tubulure d'entrée cylindrique (6) étant situé radialement en dehors de la paroi intérieure (14) du bac de réception de telle sorte que l'eau pluviale peut entrer directement dans le bac de réception
**caractérisé en ce**
**qu'**un tamis grossier (20) de forme annulaire appartient au système, dont les dimensions sont choisies de telle sorte qu'il est disposé dans la deuxième combinaison entre le bord inférieur de la tubulure d'entrée cylindrique (6) et la paroi intérieure (14) du bac de réception (12).

2. Système selon la revendication 1, **caractérisé en ce que** dans la deuxième combinaison, le bord inférieur de la tubulure d'entrée cylindrique (6) plonge dans le bac de réception (12).

3. Système selon l'une quelconque des revendications précédentes, **caractérisé en ce que** le tamis (4) s'étend vers le bas en se rétrécissant de façon conique et **en ce que** le diamètre du bord inférieur de la tubulure d'entrée (6) est plus petit que le plus grand diamètre du tamis (4) de telle sorte que dans la première combinaison le bord inférieur de la tubulure d'entrée (6) s'étend dans une projection verticale sur la paroi intérieure de forme conique du tamis (4).

4. Système selon l'une quelconque des revendications précédentes, **caractérisé en ce que** la paroi intérieure de la tubulure d'entrée (6) est dotée de rainures ou membrures évoluant en forme hélicoïdale.

5. Système selon l'une quelconque des revendications précédentes, **caractérisé en ce que** les profils extérieurs du couvercle annulaire (5), du conduit d'enveloppe (3) et du bac de réception (12) comportent respectivement une section rectangulaire ou elliptique concordante.

6. Système selon la revendication 5, **caractérisé en ce que** les profils sont respectivement formés par deux espaces évoluant parallèlement et deux courbes convexes reliant entre elles les espaces.
